# DEMANDE DE BREVET EUROPEEN

(11) **EP 4 656 805 A1**
(43) Date de publication de la demande: **03.12.2025**
(21) Numéro de dépôt: 24315262.6
(22) Date de dépôt: 31.05.2024
(51) Int. Cl.: E02D 27/42, E02D 27/52, C04B 18/04

(54) **FONDATIONS**

(71) Demandeur: TotalEnergies OneTech, 92400 Courbevoie (FR)
(72) Inventeur: Raboin, Jean-Christophe, 92078 PARIS LA DEFENSE CEDEX (FR); Gentil, Frédéric, 92078 PARIS LA DEFENSE CEDEX (FR)
(74) Mandataire: Innovincia

(57) **Abrégé**

L'invention porte sur une fondation 1, notamment pour le mât 21 d'une éolienne 2 comprenant une ancre 9 noyée dans du béton et formée d'un noyau 91 et de tronçons 92 de pales usagées d'éolienne s'étendant radialement depuis ce noyau.

## Description

La présente invention concerne la construction de fondations terrestres ou de structures marines immergées ou émergées. Elle concerne notamment des fondations pour des éoliennes.

La construction de fondations terrestres ou de structures marines immergées ou émergées doit répondre à des critères quantitatifs et qualitatifs - tels que le dimensionnement, la durabilité, le choix des matériaux et leur compatibilité entre eux lors de leur assemblage. La préservation de l'environnement et la limitation de l'emprise des constructions terrestres ou marines sur cet environnement sont des critères déterminants pour le choix d'une solution technique.

En outre, les fondations terrestres et marines sont traditionnellement réalisées en béton armé, les armatures étant constituées de pièces en acier, par exemple des fils, des ronds à béton, ou des poutres, notamment de type IPN ou UPN, assemblées par sertissage et ou soudage, le tout étant noyé dans du béton. Toutefois, la croissance des coûts des matériaux de construction ainsi que les coûts de mise en oeuvre et d'installation sont des freins rendant certains projets non viables économiquement.

Un but de l'invention est de diminuer les coûts de fabrication des fondations, notamment marines et sous-marines, et de permettre l'utilisation d'éléments à durée de vie élevée tout en présentant une bonne résistance aux conditions environnementales en général, et particulièrement en milieu marin.

Selon un premier objet de l'invention, une fondation pour un élément s'étendant selon un axe, comprend des inserts au moins partiellement en matériaux composites, ces inserts comprenant des pales ou des tronçons de pales d'éolienne de préférence usagés, noyés dans une matrice.

Si l'axe de l'élément est sensiblement vertical, la fondation est de préférence sensiblement symétrique en rotation autour de cet axe et peut comprendre une ancre, cette ancre comprenant un noyau et des bras s'étendant radialement depuis le noyau, de préférence trois à dix bras régulièrement répartis autour de l'axe. Les bras sont de préférence, tous ou en partie, formés de pales ou de tronçons de pales d'éolienne. Il est entendu que, dans la mesure du possible, tous les bras sont constitués par des pales ou des tronçons de pales d'éolienne. Toutefois, s'il n'est pas possible de disposer de suffisamment de pales pour la construction des bras, il est possible de remplacer les pales manquantes par des structures en acier ayant une fonction équivalente. A cet effet, une structure en acier acceptable pour remplacer une pale peut comprendre une poutre en acier telle qu'un IPN ou UPN. Le noyau comprend avantageusement des brides sur lesquelles peuvent être connectés les pales ou les tronçons de pales. De façon similaire, les structures en acier ayant une fonction équivalente aux pales ou tronçons de pales peuvent comprendre des moyens de connexion aux brides du noyau, de préférence sous la forme de brides.

La fondation peut aussi comprendre des renforts transversaux reliant les bras entre eux, ces renforts étant de préférence fixés aux bras par des boulons, des colliers et/ou des agrafes. Les boulons, colliers ou agrafes peuvent être en acier ou en un acier allié tel qu'un acier inoxydable. De préférence on utilise des colliers, de préférence en polymère thermoplastique, de préférence un polyéthylène, un polyamide ou un polyester, de préférence sous la forme d'un cordage. Les renforts transversaux sont avantageusement des pales ou tronçons de pales d'éolienne, de préférence usagés. Alternativement, une partie ou la totalité des renforts latéraux peut se présenter sous la forme de poutres en acier en remplacement des pales ou tronçons de pales d'éolienne.

L'utilisation d'inserts usagés en matériaux composites permet de les recycler avantageusement.

Le noyau peut comprendre des tiges de fixation s'étendant vers le haut pour y fixer l'élément. Le noyau peut aussi comprendre une partie supérieure tronconique prévue pour y fixer par emboitement une extrémité inférieure complémentaire de l'élément.

La fondation peut en outre comprendre une armature métallique disposée sous l'ancre et formée de ronds à béton disposés sous la forme d'un treillis comprenant des ronds radiaux s'étendant radialement autour de l'axe et des ronds transversaux.

La fondation peut comprendre une excavation formée dans un sol, de sorte que la matrice affleure sensiblement avec ledit sol. Elle peut aussi comprendre un lit de gravier disposé sur un fond de l'excavation.

La matrice peut être un béton. La matrice peut être un ballast. La matrice peut être un béton recouvert de ballast. La matrice peut être un ballast recouvert de béton. Le ballast a de préférence une densité apparente supérieure à 80% de la densité d'un matériau massif. Ainsi, on préfère un ballast qui comprend environ, en volume :
- 20% volumique de particules dont le diamètre moyen est inférieur à deux centimètres ;
- 20% volumique de particules dont le diamètre moyen est compris entré deux et cinq centimètres ;
- 20% volumique de particules dont le diamètre moyen est compris entre un et vingt centimètres ;
- 20% volumique de particules dont le diamètre moyen est compris entre dix et vingt centimètres ; et,
- 20% volumique de particules dont le diamètre moyen est supérieur à vingt centimètres.

Selon un second objet, l'invention est une éolienne comprenant un mât et une turbine équipée de pales qui comprend une fondation selon le premier objet de l'invention, dans laquelle l'élément est prolongé par et coaxial avec le mât de cette éolienne.

Des modes de réalisation et des variantes seront décrits ci-après, à titre d'exemples non limitatifs, avec référence aux dessins annexés dans lesquels :
[Fig. 1] est une vue schématique en élévation et en coupe d'une fondation selon un premier mode de réalisation de l'invention adapté à une éolienne terrestre ;
[Fig. 2] est une vue schématique partielle de dessus de la fondation de la figure 1 ;
[Fig. 3] est une vue schématique en élévation d'un détail de la fondation de la figure 1 ;
[Fig. 4] est une vue schématique en élévation et en coupe d'une fondation selon un deuxième mode de réalisation de l'invention adapté à une éolienne en mer ; et,
[Fig. 5] est une vue schématique en élévation et en coupe d'une fondation selon un troisième mode de réalisation de l'invention adapté à une éolienne en mer.

Notamment les termes « haut », « bas », « horizontal » et « vertical » sont arbitraires et se réfèrent à une position d'usage habituelle pour une caisse claire. Ils font aussi référence aux positions illustrées aux figures.

Le terme « gravier » correspond ici à un granulat d'une roche naturelle, par exemple un granite ou un schiste, ou d'une roche synthétique, par exemple un béton ou un laitier de haut fourneau, dont la taille maximale des particules est de cent cinquante millimètres. Le gravier peut être un béton concassé.

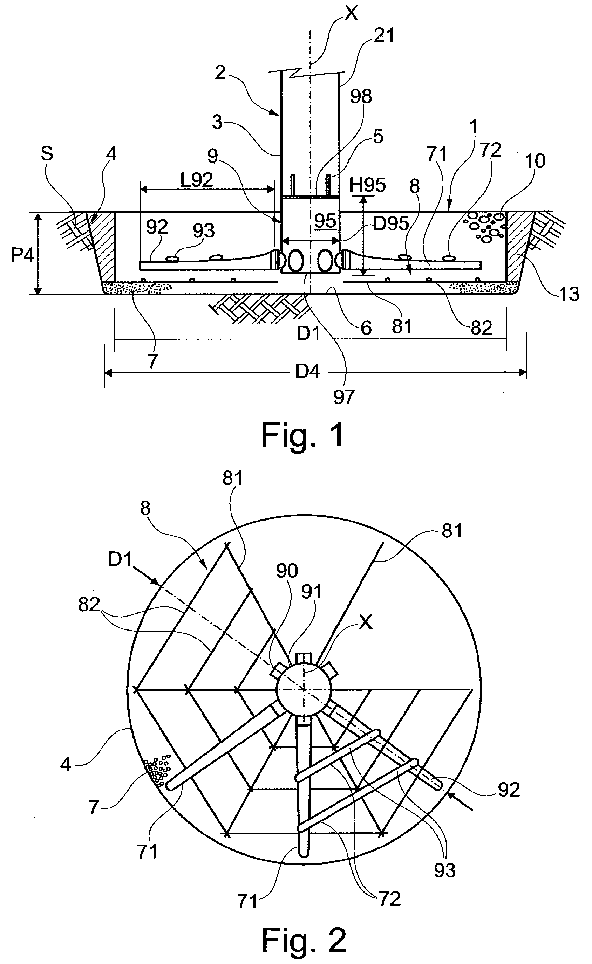

Les figures 1 à 3 illustrent un premier mode de réalisation pour une fondation 1 selon l'invention. Dans cet exemple, la fondation sert à l'ancrage d'une éolienne 2 terrestre dans un sol S argilo-calcaire. A la figure 1, seule une base d'un mât 21 de cette éolienne 2 est représentée.

La fondation 1 est construite sensiblement symétriquement autour d'un axe vertical X. Lorsque l'éolienne 2 est fixée à la fondation, tel qu'illustré à la figure 1, le mât 21 s'étend sensiblement selon l'axe X.

Préalablement à la construction de la fondation 1, on réalise une excavation 4 dans le sol S, d'une profondeur P4 et de diamètre D4 autour de l'axe X de la fondation. Le fond 6 de l'excavation 4 est nivelé horizontalement et compacté. Le diamètre D4 de la fouille est mesuré sur le fond 6. Un lit 7 de graviers est d'abord disposé horizontalement sur le fond 6 de l'excavation 4.

La fondation comprend une armature métallique 8 et une ancre 9, noyées dans du béton 10.

A la figure 2, l'armature 8 et l'ancre 9 sont représentées partiellement pour que leurs composants soient mieux identifiables. Il doit être compris que la fondation est symétrique en rotation autour de son axe X. Dans l'exemple illustré, la fondation est symétrique par une rotation modulo un angle de soixante degrés.

L'armature métallique 8 est disposée au-dessus des graviers. Dans l'exemple illustré, elle est constituée de ronds à béton 81, 82, disposés horizontalement, selon un schéma qui a l'aspect d'une toile d'araignée. Cette disposition est particulièrement visible à la figure 2. Elle comprend des ronds radiaux 81, disposés radialement autour de l'axe X, au-dessus du lit 7. Elle comprend en outre des ronds transversaux 82, disposés concentriquement autour de l'axe X et qui relient entre eux les ronds radiaux 81. Les ronds radiaux et transversaux sont fixés entre eux par soudage, par ligatures ou par des agrafes 96. La longueur d'un rond transversal est d'autant plus grande que le rond est éloigné de l'axe X.

Pour limiter les risques de corrosion, l'armature métallique 8 est disposée suffisamment haut au-dessus des graviers 7, de préférence d'au moins dix centimètres, de façon à permettre un enrobage suffisant, par du béton.

L'ancre 9 comprend un noyau 91 et des bras 71 qui s'étendent horizontalement et radialement depuis le noyau. Elle comprend en outre des renforts transversaux 72 qui relient les bras 71 entre eux. Dans l'exemple illustré, les bras 71 et les renforts 72 sont formés à partir de pales usagées 92, 93 d'éoliennes, tronçonnées.

Les bras 71 sont des tronçons proximaux de ces pales usagées, coupées à une distance L92 de leur bride de fixation 90. On désigne par tronçon proximal la partie de l'éolienne qui s'étend depuis sa bride de fixation, à l'opposé de la partie distale, c'est-à-dire de son extrémité libre. Le noyau 91 comprend un tube cylindrique 95 métallique et des brides 90 fixées sur ce tube. Dans l'exemple illustré, le noyau comprend six brides régulièrement réparties autour du tube 95. Chaque bride est prévue pour y fixer par des moyens 11 un bras 92 respectif. Cette disposition permet de fixer chaque tronçon proximal de la même façon et aussi solidement que la pale usagée dont il est issu l'était sur l'éolienne qui en était équipée. La bride est disposée de sorte que les moyens de fixation 11 les plus bas soient au moins à une hauteur H11 au-dessus d'un bord horizontal inférieur 97 du tube 95.

Les moyens de fixation peuvent comprendre des goujons ou inserts filetés noyés dans la résine de chaque pale. Ceci permet une fixation directe de chaque pale sur une bride respective 90 du noyau 91.

Les renforts sont avantageusement des tronçons de la partie distale, c'est à dire de ce qui reste de la pale usagée après le retrait du tronçon proximal utilisé pour réaliser un bras 92. Les renforts 93 sont fixés sur les bras 92 à l'aide d'agrafes 96.

Le tube 95 est disposé coaxialement avec l'axe X de la fondation 1. Il a un diamètre externe D95 sensiblement constant et une hauteur H95 égale ou supérieure à la profondeur P4 de l'excavation 4. La hauteur H95 étant mesurée entre le bord inférieur 97 et un bord supérieur horizontal 98. Dans l'exemple illustré, la hauteur H95 du tube est égale à la profondeur P4 de l'excavation 4, de sorte que lorsque le noyau 91 repose par son bord inférieur 97 sur le lit 7 de graviers, le bord supérieur 98 ressort de l'excavation 4 ; ceci est particulièrement illustré à la figure 1.

Le tube 95 comprend en son sommet des connecteurs 5 pour le mât 3 de l'éolienne. Dans l'exemple illustré, les connecteurs 5 sont des tiges filetées s'étendant verticalement vers le haut depuis le bord supérieur 98. Les connecteurs permettent de solidariser le mât avec la fondation, par boulonnage des tiges filetées 5.

Pour réaliser la fondation, on dépose l'ancre 9 sur le lit 7 de graviers, on fixe les renforts sur les bras et on fixe l'ancre sur l'armature 8. Par ailleurs, on réalise un coffrage sensiblement cylindrique de diamètre intérieur D1 et on y coule le béton 10, jusqu'au niveau du sol S. Un remblai 13 est ensuite mis en oeuvre dans l'excavation 4, autour de la fondation, pour combler le vide entre le béton 10 et le sol S.

Dans l'exemple illustré aux figures 1 à 3 les dimensions sont les suivantes. Les pales usagées utilisées sont des pales de 30 mètres hors-tout ; le tronçon proximal 92 qui y est prélevé a une longueur L92 égale à 8,50 mètres (L92 = 8,5 m). La profondeur P4 de l'excavation 4 est égale à 3 mètres (P4 = 3 m) et son diamètre D4 est égal à 30 mètres (D4 = 30 m). Le diamètre D1 du béton est égal à 25 mètres (D1 = 25 m). Les ronds à béton radiaux ont un diamètre nominal de 16 millimètres. Le diamètre D95 du tube est égal à 8 mètres, sa hauteur H95 est de 3 mètres. La hauteur sous boulonnage H11 est égale à 5 centimètres (H11 = 5 cm).

Alternativement, on peut ne pas réaliser de coffrage et couler directement le béton dans l'excavation 4.

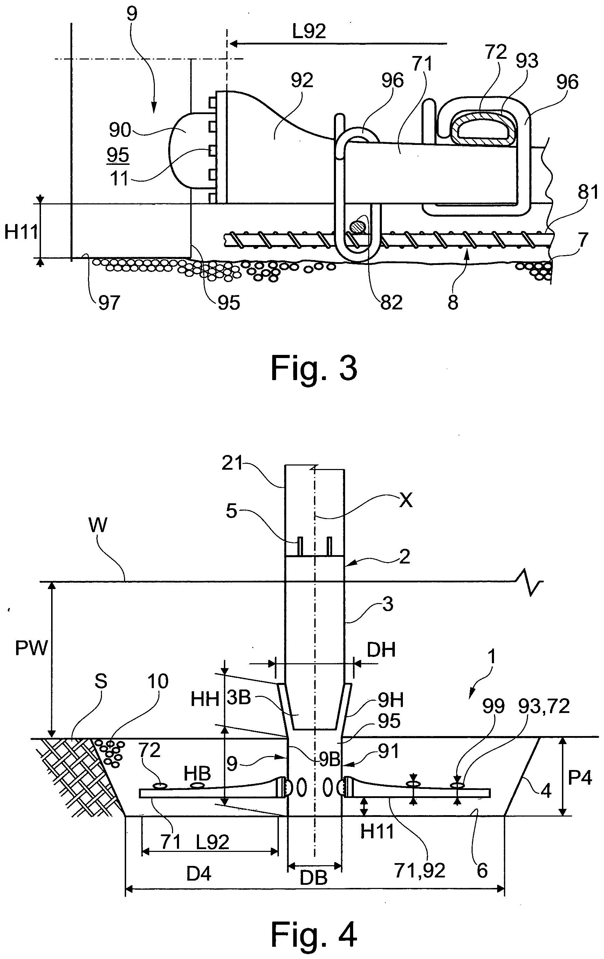

On va maintenant décrire, en référence à la figure 4, un deuxième mode de réalisation pour une fondation selon l'invention, en ce qu'il diffère du premier mode de réalisation. Dans ce deuxième mode de réalisation, une fondation 1 selon l'invention est utilisée pour ancrer une éolienne 2 en mer (offshore), dans un sol marin argileux S à une profondeur PW sous la surface W de la mer.

Dans cet exemple, comme dans le premier mode de réalisation, on réalise une excavation 4. L'ancre 9 comprend aussi un noyau 91 et six bras 92. Dans l'exemple illustré à la figure 4, le tube diffère en ce qu'il comprend une partie basse 9B cylindrique et une partie haute 9H tronconique. Le tube 95 est représenté en coupe à la figure 4. La partie basse a un diamètre externe DB une hauteur HB. La partie haute s'étend vers le haut depuis la partie basse sur une hauteur HH en même temps que son diamètre augmente depuis le diamètre DB de la partie basse jusqu'à un diamètre externe maximal DH. La forme tronconique de la partie haute 9H permet d'y introduire et y fixer par emmanchement une extrémité inférieure 3B tronconique du mat 3.

Les renforts 93 sont là aussi des tronçons de parties distales de pales. Dans cet exemple, ils sont fixés sur les bras 92 par des boulons 99.

Dans cet exemple, la fondation ne comprend ni lit de gravier ni armature métallique. Le noyau 9 repose directement sur le fond 6 de l'excavation 4. L'excavation 4 est entièrement remplie d'un béton 10. Alternativement, lorsque le fond 6 n'est pas en mesure de supporter le poids du noyau, il est avantageux de préparer le sol ; par exemple on réalise un lit de graviers au moins là où repose le noyau.

Dans l'exemple illustré à la figure 4, les dimensions sont les suivantes. La profondeur d'eau PW est égale à 70 mètres (PW = 70 m). Les pales usagées utilisées sont des pales de 40 mètres hors-tout ; le tronçon proximal 92 qui y est prélevé a une longueur L92 égale à 20 mètres (L92 = 20 m). La profondeur P4 de l'excavation 4 est égale à 4 mètres (P4 = 4 m) et son diamètre D4 est égal à 52 mètres (D4 = 52 m).. La hauteur sous boulonnage H11 est égale à 5 centimètres (H11 = 5 cm). La partie basse 9B du tube 95 a un diamètre DB constant égal à 10 mètres et une hauteur HB égale à 4 mètres (DB = 10 m ; HB = 4). La partie haute du tube 95 a un diamètre DH maximal égal à 11 mètres et une hauteur HH égale à 6 mètres (DH = 11 m ; HH = 6).

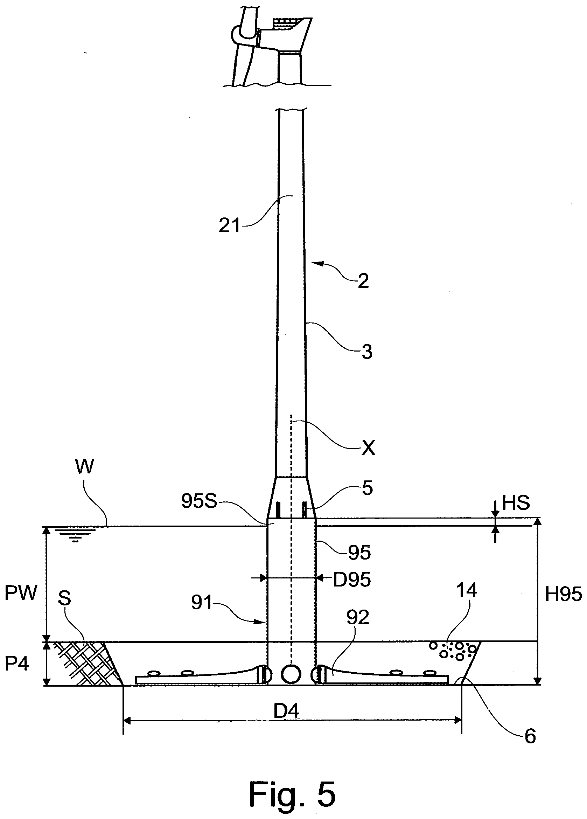

On va maintenant décrire, en référence à la figure 5, un troisième mode de réalisation pour une fondation selon l'invention, en ce qu'il diffère du deuxième mode de réalisation. Dans ce troisième mode de réalisation, une fondation 1 selon l'invention est utilisée pour ancrer une éolienne 2 en mer (offshore) dans un sol marin argileux S à une profondeur PW sous la surface W de la mer.

Dans cet exemple, le tube 95 est cylindrique c'est-à-dire qu'il a un diamètre constant. Il a en outre une hauteur H95 telle que dans la position d'usage illustrée, sa partie supérieure 95S émerge d'une hauteur HS au-dessus de la surface W de l'eau. Le tube 95 comprend des tiges filetées 5 qui s'étendent verticalement vers le haut depuis la partie supérieure. Ainsi, le mât 21 peut être fixé sur la partie supérieure 95S à l'aide des tiges 5, sans nécessiter l'intervention de plongeurs.

Dans ce troisième mode de réalisation, la profondeur P4 de l'excavation 4 est plus grande et le béton est remplacé par un ballast 14. Un ballast acceptable pour cet usage est un ballast qui n'est pas susceptible d'être entrainé par le courant marin dans les conditions normales pour le site d'implantation de la fondation. Des exemples de ballast acceptable incluent des roches de densité massive supérieure à 1,5 ; de préférence supérieure à 2 et idéalement supérieure à 3. Un exemple de ballast préféré est un minerai de fer dont la teneur massique en fer est supérieure à 20%. Le ballast aura préférentiellement une distribution de granulométrie large de façon à avoir une densité apparente (en anglais : bulk density) qui soit proche de la densité du matériau massif (en anglais : volumétrie mass density). Par exemple, le ballast 14 pourra comprendre 20% volumique de particules dont le diamètre moyen est inférieur à deux centimètres, 20% volumiques de particules dont le diamètre moyen est compris entre deux et cinq centimètres, 20% volumique de particules dont le diamètre moyen est compris entre un et vingt centimètres, 20% volumique de particules dont le diamètre moyen est compris entre dix et vingt centimètres, et 20% volumique de particules dont le diamètre moyen est supérieur à vingt centimètres. Il est entendu que les pourcentages volumiques des particules de granulométrie spécifiée tels que mentionnés dans la présente invention sont mesurés avant leur mélange pour l'obtention des ballasts.

Dans l'exemple illustré à la figure 5, les dimensions sont les suivantes. La profondeur d'eau PW est égales à 50 mètres (PW = 50 m). Les pales usagées utilisées sont des pales de 40 mètres hors-tout ; le tronçon proximal 92 a une longueur L92 égale à 20 mètres (L92 = 20 m). La profondeur P4 de l'excavation 4 est égale à 15 mètres (P4 = 15 m) et son diamètre D4 est égal à 52 mètres (D4 = 52 m). La totalité du volume de l'excavation 4 est comblée avec un ballast, idéalement un minerai à densité apparente élevée, par exemple un minerai de fer. Le tube a un diamètre D95 égal à 10 mètres et une hauteur H95 égale à 70 mètres, de sorte que la hauteur émergée HS est égale à 5 mètres (D95 = 10 m ; H95 = 70 m).

Il est particulièrement avantageux de combler l'excavation 4 avec un ballast 14 plutôt qu'un béton, car cela limite l'empreinte carbone de l'éolienne 2 et facilite son démantèlement en fin de vie. En effet, lors de son démantèlement, il suffit de draguer le ballast au moins en partie et d'injecter de l'air dans le tube 95 pour desceller l'ancrage, éventuellement en requérant l'assistance d'une grue ou en mettant en place des bouées arrimées au tube 95 et/ou aux pales ou tronçons de pales connectés au tube 95. Il suffit ensuite de remettre en place le sol excavé pour rendre le site d'implantation dans son état initial.

Le comblement de l'excavation 4 avec un ballast a pour conséquence une pénétration de l'eau environnante au contact de la structure d'ancrage et donc de risques de corrosion accrus. Ces risques de corrosion sont atténués en remplaçant avantageusement les éléments corrodables par des éléments non corrodables, par exemple des aciers inoxydables ou préférentiellement des polymères. Ceci est particulièrement désirable pour les connecteurs 96 liant les pales ou tronçons de pales 92 avec les renforts transversaux 93. Dans ce cas, ces connecteurs 96 peuvent être des câbles en acier inoxydable ou en polymère tel que Dyneema^{®} solidarisant les pales ou tronçons de pales 92 avec les renforts transversaux 93 par au moins une boucle serrée au moyen d'un serre-câble.

Bien sûr, l'invention n'est pas limitée aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, au lieu d'utiliser des agrafes pour fixer les renforts sur les bras on peut utiliser des boulons, des câbles en acier ou en polymère tel que Dyneema^{®}, assemblés par serrage au moyen d'un serre-câble.

Aussi, une fondation selon l'invention peut être utilisée pour d'autres buts que le maintien d'une éolienne. Elle peut, par exemple, être utilisée comme fondation pour un poteau d'une ligne électrique très haute tension ou pour un poteau d'un téléphérique.

Dans le cas où l'ancre comprend un noyau ayant une partie tronconique, celle-ci peut être inversée, c'est-à-dire se rétrécissant vers le haut, de sorte qu'elle est prévue pour venir s'emboiter à l'intérieur d'une extrémité inférieure évasée d'un mât.

## Revendications

1. Fondation (1) pour un élément (3) s'étendant selon un axe (X), **caractérisée en ce qu'**elle comprend des inserts au moins partiellement en matériau composite, lesdits inserts comprenant des pales ou des tronçons (92, 93) de pales d'éolienne, de préférence usagés, noyés dans une matrice (10, 14).

2. Fondation (1) selon la revendication 1, **caractérisée en ce que** l'axe (X) est sensiblement vertical, qu'elle est sensiblement symétrique en rotation autour dudit axe et **en ce qu'**elle comprend une ancre (9), ladite ancre comprenant un noyau (91) et des bras (71) s'étendant radialement depuis ledit noyau, de préférence trois à dix bras (71) régulièrement répartis autour de l'axe (X), lesdits bras étant tous ou en partie formés de pales ou tronçons (92) de pales d'éolienne.

3. Fondation (1) selon la revendication 2, **caractérisée en ce que** le noyau (91) comprend des brides (90) pour y connecter les pales ou tronçons de pales (92).

4. Fondation (1) selon l'une des revendications 2 et 3, **caractérisée en ce qu'**elle comprend des renforts transversaux (72) reliant les bras (71) entre eux, lesdits renforts étant de préférence fixées aux bras par des boulons (99), des colliers et/ou des agrafes (96), de préférence des colliers, de préférence en polymère thermoplastique, de préférence un polyéthylène, un polyamide ou un polyester, de préférence sous la forme d'un cordage

5. Fondation (1) selon la revendication 4, **caractérisée en ce que** les renforts transversaux (72) sont des pales ou des tronçons (93) de pales d'éolienne, de préférence usagés.

6. Fondation (1) selon l'une des revendications 2 à 5, **caractérisée en ce que** le noyau (91) comprend des tiges de fixation (5) s'étendant vers le haut pour y fixer l'élément (3).

7. Fondation (1) selon l'une des revendications 2 à 6, **caractérisée en ce que** le noyau (91) comprend une partie supérieure (9H) tronconique prévue pour y fixer par emboitement une extrémité inférieure (3B) de l'élément (3).

8. Fondation (1) selon l'une des revendications 2 à 7, **caractérisée en ce qu'**elle comprend une armature métallique (8) disposée sous l'ancre (9) et formée de ronds à béton disposés sous la forme d'un treillis comprenant des ronds radiaux (81) s'étendant radialement autour de l'axe et des ronds transversaux (82).

9. Fondation (1) selon l'une des revendications 1 à 6, **caractérisée en ce qu'**elle comprend une excavation (4) formée dans un sol (S), de sorte que la matrice (10, 14) affleure sensiblement avec ledit sol.

10. Fondation (1) selon la revendication 9, **caractérisée en ce qu'**elle comprend un lit de gravier (7) disposé sur un fond (6) de l'excavation (4).

11. Fondation (1) selon l'une des revendications 1 à 10, **caractérisée** en ce la matrice est un béton (10).

12. Fondation (1) selon l'une des revendications 1 à 10, **caractérisée** en ce la matrice est un ballast (14).

13. Fondation (1) selon la revendication 12, **caractérisée en ce que** le ballast (14) a une densité apparente supérieure à 80% de la densité du matériau massif.

14. Fondation (1) selon l'une des revendications 12 ou 13, **caractérisée en ce que** le ballast (14) comprend environ, en volume :
- 20% de volumique particules dont le diamètre moyen est inférieur à deux centimètres ;
- 20% volumique de particules dont le diamètre moyen est compris entre deux et cinq centimètres ;
- 20% volumique de particules dont le diamètre moyen est compris entre un et vingt centimètres ;
- 20% volumique de particules dont le diamètre moyen est compris entre dix et vingt centimètres ; et,
- 20% volumique de particules dont le diamètre moyen est supérieur à vingt centimètres.

15. Eolienne (2), comprenant un mât (21) et une turbine équipée de pales, **caractérisée en ce qu'**elle comprend une fondation selon l'une des revendications 1 à 14, dans laquelle l'élément (3) est prolongé par le mât (21) et est coaxial avec le mât (21) de l'éolienne.
